# EUROPÄISCHE PATENTSCHRIFT

(11) **EP 2 651 712 B1**
(45) Veröffentlichungstag und Bekanntmachung des Hinweises auf die Patenterteilung: **27.02.2019**
(21) Anmeldenummer: 11781533.2
(22) Anmeldetag: 09.11.2011
(51) Int. Cl.: B60S 1/38

(54) **WISCHBLATTVORRICHTUNG**
WIPER BLADE DEVICE
SYSTÈME DE BALAI D'ESSUIE-GLACE

(30) Priorität: 13.12.2010 DE 102010062906
(43) Veröffentlichungstag der Anmeldung: 23.10.2013
(73) Patentinhaber: Robert Bosch GmbH, 70442 Stuttgart (DE)
(72) Erfinder: HERINCKX, Dirk, B-3350 Linter (BE); DEPONDT, Helmut, B-3010 Kessel-Lo (BE); BEX, Koen, B-3890 Jeuk (BE)
(86) Internationale Anmeldenummer: PCT/EP2011/069740
(87) Internationale Veröffentlichungsnummer: WO 2012/079857

(56) Entgegenhaltungen:
- EP-A1- 2 236 366
- DE-A1- 1 942 345
- DE-B- 1 116 090
- GB-A- 2 005 532
- US-A- 2 923 021
- US-A1- 2003 126 713
- US-A1- 2006 265 830
- US-A1- 2008 150 193

## Beschreibung

### Stand der Technik

Die Erfindung geht aus von einer Wischblattvorrichtung nach dem Oberbegriff des Patentanspruchs 1, wie in US-A-2008/0150193 offenbart. Es ist bereits eine Wischblattvorrichtung mit einer Wischleisteneinheit, die einen Längsführungskanal zur Aufnahme eines Trägerelements aufweist bekannt.

### Offenbarung der Erfindung

Die Erfindung geht aus von einer Wischblattvorrichtung mit einer Wischleisteneinheit, die einen Längsführungskanal zur Aufnahme eines Trägerelements aufweist.
Es wird vorgeschlagen, dass der Längsführungskanal zumindest eine Seitenöffnung aufweist, wodurch bei einer Herstellung vorteilhaft Material eingespart werden kann. Unter einer "Wischleisteneinheit" soll dabei in diesem Zusammenhang insbesondere eine Einheit verstanden werden, die dazu vorgesehen ist, einen Wischblattadapter mit einer Wischlippe zu verbinden. Unter einem "Längsführungskanal" soll in diesem Zusammenhang insbesondere ein Führungskanal verstanden werden, der sich in montiertem Zustand in einer Längserstreckung der Wischleisteneinheit erstreckt. Unter einer "Längserstreckung" soll in diesem Zusammenhang insbesondere eine größtmögliche Erstreckung verstanden werden. Unter einer "Erstreckung" eines Elements soll in diesem Zusammenhang insbesondere ein maximaler Abstand zweier Punkte einer senkrechten Projektion des Elements auf eine Ebene verstanden werden. Unter einer "Seitenöffnung" soll in diesem Zusammenhang insbesondere eine Ausnehmung verstanden werden, die in einer Seitenwand der Wischleisteneinheit angeordnet ist und einen Durchgang in den Längsführungskanal bildet. Bevorzugt ist die Seitenöffnung durch eine geschlossene Kontur begrenzt. Besonders bevorzugt verläuft eine Haupterstreckung der Seitenöffnung parallel zur Längserstreckung der Wischleisteneinheit. Unter einem "Trägerelement" soll in diesem Zusammenhang insbesondere ein federelastisches Element verstanden werden, das zumindest eine Erstreckung aufweist, die in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung der Erstreckung abhängige und vorzugsweise zu der Veränderung proportionale Gegenkraft erzeugt, die der Veränderung entgegen wirkt. Unter "vorgesehen" soll insbesondere speziell ausgelegt und/oder ausgestattet verstanden werden. Unter einem "Wischblattadapter" soll in diesem Zusammenhang insbesondere ein Adapter verstanden werden, der dazu vorgesehen ist, einen Kopplungsbereich der Wischblattvorrichtung für eine Kopplung mit einem Wischarm bereitzustellen.
Grenzt die zumindest eine Seitenöffnung an Zwischenelemente der Wischleisteneinheit an, kann die Wischblattvorrichtung besonders stabil ausgeführt werden. Unter einem "Zwischenelement" soll in diesem Zusammenhang insbesondere ein Element verstanden werden, das zwischen zwei Bauteilen der Wischleisteneinheit angeordnet ist und diese miteinander verbindet.

Nach der Erfindung wird vorgeschlagen, dass die Zwischenelemente einstückig mit einem weiteren Bauteil der Wischleisteneinheit ausgebildet sind, wodurch eine besonders stabile und gleichzeitig kostengünstige Verbindung erzielt werden kann. Als weiteres Bauteil kann es sich dabei um Wischlippe handeln. Bevorzugt handelt es sich dabei jedoch um ein Windabweiserelement. Unter einem "Windabweiserelement" soll in diesem Zusammenhang insbesondere ein Element verstanden werden, das dazu vorgesehen ist, einen auf die Wischblattvorrichtung wirkenden Fahrtwind abzuweisen und/oder für ein Anpressen der Wischlippe auf eine Fahrzeugscheibe zu nutzen. Bevorzugt weist das Windabweiserelement zumindest eine konkave Fläche auf. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren.

Nach der Erfindung wird vorgeschlagen, dass die Zwischenelemente in zwei Längsreihen angeordnet sind, wodurch eine besonders stabile Ausführung der Wischblattvorrichtung erreicht werden kann. Unter einer "Längsreihe" soll in diesem Zusammenhang insbesondere eine Reihe von Zwischenelementen verstanden werden, die sich parallel zur Längserstreckung der Wischleisteneinheit erstreckt.
Sind die Zwischenelemente einer Längsreihe in einer Längsrichtung betrachtet versetzt zu den Zwischenelementen der anderen Längsreihe angeordnet, können auf die Wischleisteneinheit wirkende Kräfte besonders gleichmäßig verteilt werden. Unter einer "Längsrichtung" soll in diesem Zusammenhang insbesondere eine Richtung verstanden werden, die sich im Wesentlichen parallel zu einer Längserstreckung der Wischleisteneinheit erstreckt. Unter "im Wesentlichen" soll in diesem Zusammenhang insbesondere eine Abweichung von weniger als 10°, bevorzugt weniger als 5° verstanden werden. Unter "versetzt" soll in diesem Zusammenhang insbesondere verstanden werden, dass sich eine senkrecht zur Längsrichtung erstreckende Ebene, die sich in Längsrichtung bewegt, über einen Großteil der Längserstreckung nur ein Zwischenelement gleichzeitig schneidet. Bevorzugt schneidet die Ebene über die gesamte Längserstreckung maximal ein Zwischenelement gleichzeitig. Unter einem "Großteil" soll in diesem Zusammenhang insbesondere mehr als 50%, bevorzugt mehr als 80%, besonders bevorzugt mehr als 95% verstanden werden.
Weist das Trägerelement eine Schutzbeschichtung auf, die dazu vorgesehen ist, das Trägerelement vor Beschädigungen und/oder Korrosionen zu schützen, können Abnutzungserscheinungen der Wischblattvorrichtung vorteilhaft verzögert werden. Unter einer "Schutzbeschichtung" soll in diesem Zusammenhang insbesondere eine Beschichtung verstanden werden, die härter und/oder korrosionsbeständiger ist, als das Trägerelement.
Ein Wischblattadapter kann besonders schnell an das Windabweiserelement montiert werden, wenn die Wischleisteneinheit zumindest eine Befestigungsausnehmung aufweist, die dazu vorgesehen ist, einen Formschluss mit einem Wischblattadapter zu bilden.

Umfasst die Wischblattvorrichtung einen Wischblattadapter, der zumindest ein Befestigungsmittel aufweist, das einen Formschluss mit einem Windabweiserelement der Wischleisteneinheit bildet und dazu vorgesehen ist, eine Bewegung der Wischleisteneinheit relativ zum Wischblattadapter in einer Längsrichtung zu vermeiden, kann der Wischblattadapter besonders kostengünstig und stabil an der Wischleisteneinheit montiert werden.

Bildet der Wischblattadapter einen Formschluss mit dem Trägerelement, und eine Bewegung des Trägerelements relativ zum Wischblattadapter in Längsrichtung vermeidet, kann die Wischvorrichtung besonders kompakt ausgebildet werden.

Wird der Wischblattadapter auf die Wischleisteneinheit gesetzt, wobei zumindest ein Befestigungsmittel formschlüssig in die Befestigungsausnehmung formschlüssig eingreift, kann eine schnelle und sichere Montage erfolgen.

Wird nach einem Aufsetzen des Wischblattadapters auf die Wischleisteneinheit, ein Trägerelement in die Wischleisteneinheit und in eine Längsführungseinheit des Wischblattadapters eingeschoben, kann die Wischblattvorrichtung besonders stabil ausgeführt werden. Unter einer "Längsführungseinheit" soll in diesem Zusammenhang insbesondere eine Einheit verstanden werden, die dazu vorgesehen ist, eine Führung eines Trägerelements in Längsrichtung bereitzustellen. Bevorzugt weist die Längsführungseinheit zumindest eine sich in Längsrichtung erstreckende Führungsnut auf, die dazu vorgesehen ist, einen Formschluss mit der Trägereinheit zu bilden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht einer erfindungsgemäßen Wischblattvorrichtung in einem montierten Zustand,
- Fig. 2: eine perspektivische Ansicht eines Endbereichs einer Wischleisteneinheit der Wischblattvorrichtung nach Figur 1,
- Fig. 3: eine perspektivische Ansicht eines weiteren Endbereichs der Wischleisteneinheit nach Figur 2,
- Fig. 4: eine perspektivische Ansicht eines Wischblattadapteraufnahmebereichs der Wischleisteneinheit nach Figur 2,
- Fig. 5: eine perspektivische Ansicht eines Windabweiserelements einer Wischleisteneinheit nach Figur 2,
- Fig. 6: eine perspektivische Ansicht eines Trägerelements der Wischblattvorrichtung nach Figur 1,
- Fig. 7: eine Draufsicht auf einen Ausschnitt des Trägerelements nach Figur 6,
- Fig. 8: eine perspektivische Ansicht eines Wischblattadapters einer Wischblattvorrichtung nach Figur 1,
- Fig. 9: eine perspektivische Ansicht der Wischblattvorrichtung nach Figur 1 in einem ersten Montageschritt,
- Fig. 10: eine perspektivische Ansicht der Wischblattvorrichtung nach Figur 1 in einem zweiten Montageschritt und
- Fig. 11: eine perspektivische Ansicht der Wischblattvorrichtung nach Figur 1 in einem dritten Montageschritt.

### Beschreibung des Ausführungsbeispiels

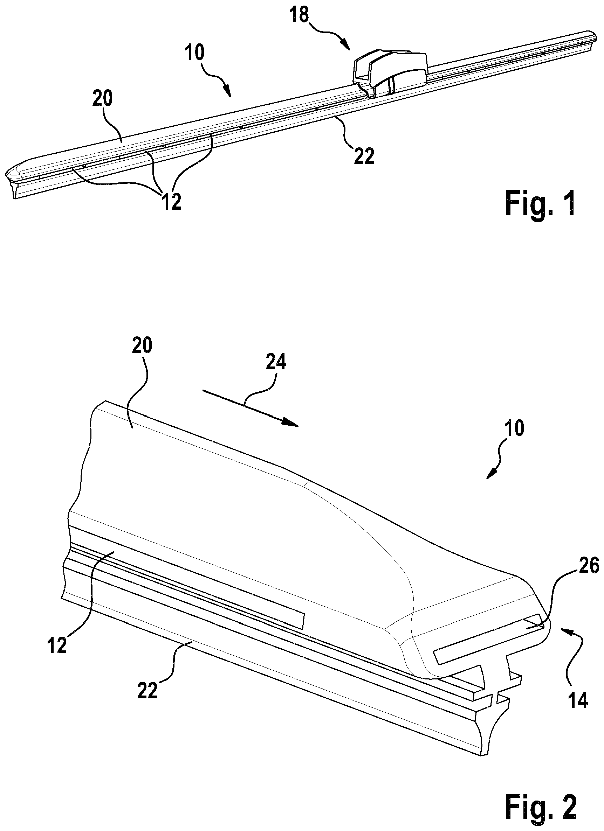

Figur 1 zeigt eine perspektivische Ansicht einer erfindungsgemäßen Wischblattvorrichtung mit einer Wischleisteneinheit 10 und einem Wischblattadapter 18 in einem montierten Zustand. Die Wischleisteneinheit 10 umfasst ein Windabweiserelement 20 und eine Wischlippe 22. Die Wischleisteneinheit 10 beinhaltet einen Längsführungskanal 14, der eine Vielzahl an Seitenöffnungen 12 aufweist, die in regelmäßigen Abständen über die Wischleisteneinheit 10 verteilt sind. Die Seitenöffnungen 12 grenzen an eine Vielzahl von Zwischenelementen 28 der Wischleisteneinheit 10 an. Außerdem grenzen die Seitenöffnungen 12 an den Längsführungskanal 14 an und öffnen diesen seitlich. Die Seitenöffnungen 12 sind durch eine geschlossene Kontur begrenzt.

Die Zwischenelemente 28 sind jeweils zwischen zwei Seitenöffnungen 12 angeordnet. Ferner sind die Zwischenelemente 28 einstückig mit dem Windabweiserelement 20 ausgebildet. In diesem Zusammenhang ist es jedoch ebenfalls denkbar, die Zwischenelemente 28 einstückig mit der Wischlippe 22 auszubilden.

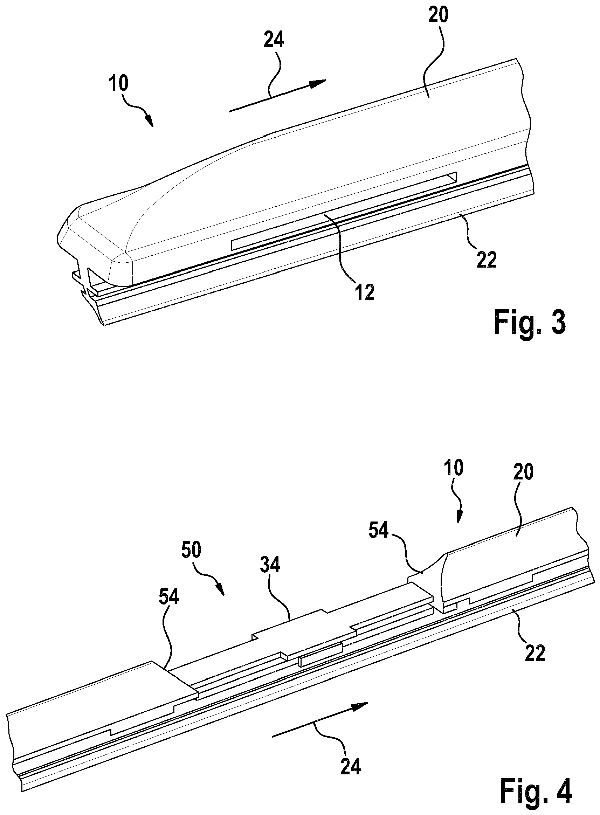

Wie in Figur 2 gezeigt, weist der Längsführungskanal 14 eine Längsführungskanalöffnung 26 auf, die den Längsführungskanal 14 in einer Längsrichtung 24 einseitig öffnet. Die Längsrichtung 24 erstreckt sich parallel zu einer Längserstreckung der Wischleisteneinheit 10. Die Seitenöffnungen 12 erstrecken sich quer zur Längsrichtung 24. Eine Haupterstreckung der Seitenöffnung 12 verläuft jedoch parallel zur Längsrichtung 24. Auf einer der Längsführungskanalöffnung 26 in Längsrichtung 24 gegenüberliegenden Seite, ist der Längsführungskanal 14 geschlossen (Figur 3).

Figur 4 zeigt einen Wischblattadapteraufnahmebereich 50 der Wischleisteneinheit 10 in einer perspektivischen Ansicht. Eine Befestigungsausnehmung 52 der Wischleisteneinheit 10 grenzt an zwei Seitenwandungen 54 des Windabweiserelements 20 an und weist eine Auflagefläche 56 auf. Die Seitenwandungen 54 schließen zur Längsrichtung 24 einen Winkel von 45° ein. Zueinander schließen die Seitenwandungen 54 daher einen Winkel von 90° ein. Die Auflagefläche 56 befindet sich auf einem Auflagekörper 58, der sich in der Befestigungsausnehmung 14 durchgängig erstreckt, d.h. beidseitig an das Windabweiserelement 20 angrenzt.

An den Seitenwandungen 54 ist der Längsführungskanal 26 der Wischleisteneinheit 12 geöffnet. Der Auflagekörper 58 führt den Längsführungskanal 26 innerhalb des Wischblattadapteraufnahmebereichs 50 fort.

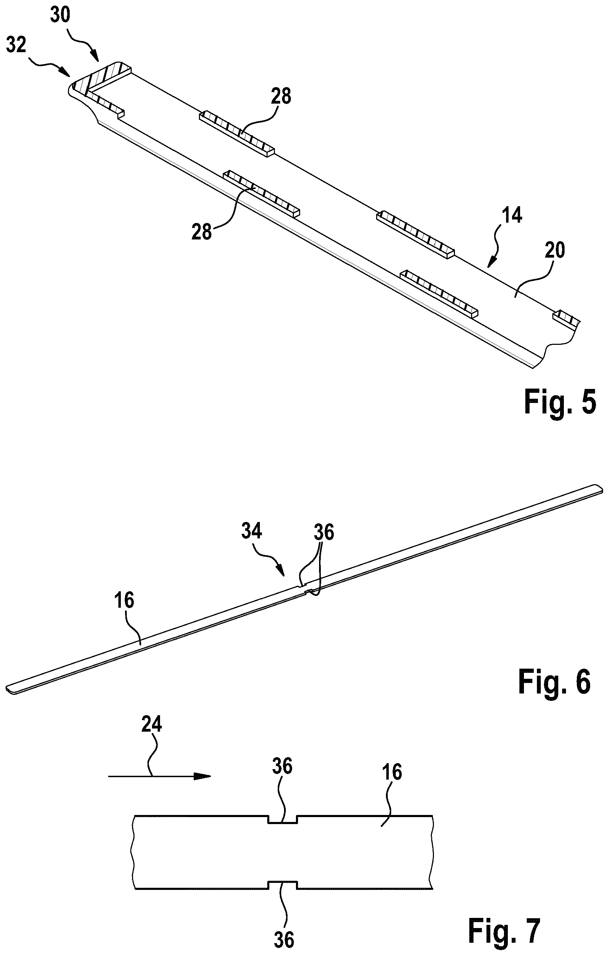

Figur 5 zeigt eine perspektivische Ansicht eines Windabweiserelements 20 ohne die Wischlippe 22. Die Zwischenelemente 28 sind in einer ersten und einer zweiten Längsreihe 30, 32 angeordnet, die sich parallel zur Längsrichtung 24 erstrecken. Dabei sind die Zwischenelemente 28 der ersten Längsreihe 30 in Längsrichtung 24 betrachtet versetzt zu den Zwischenelementen 28 der zweiten Längsreihe 32 angeordnet. Während einer Montage wird die Wischlippe 22 auf das Windabweiserelement 20 geklebt und somit stoffschlüssig verbunden.

Figur 6 zeigt ein federelastisches Trägerelement 16 in einer perspektivischen Ansicht. Das Trägerelement 16 besteht aus einem Federstahl und weist ein mittig angeordnetes Rastmittel 34 auf, das zwei Rastausnehmungen 36 umfasst. Das Trägerelement 16 weist eine Schutzbeschichtung auf, die vor Beschädigungen und Korrosionen schützt.

Die Rastausnehmungen 36 werden aus dem Federstahl ausgestanzt und weisen ein rechteckiges Profil auf, wie in Figur 7 in einer Draufsicht gezeigt. Ferner sind die Rastausnehmungen 36 in Längsrichtung 24 betrachtet auf gleicher Höhe angeordnet. Ein Querschnitt des Trägerelements 16 entspricht einem senkrecht zur Längsrichtung 24 verlaufenden Querschnitt des Längsführungskanals 14.

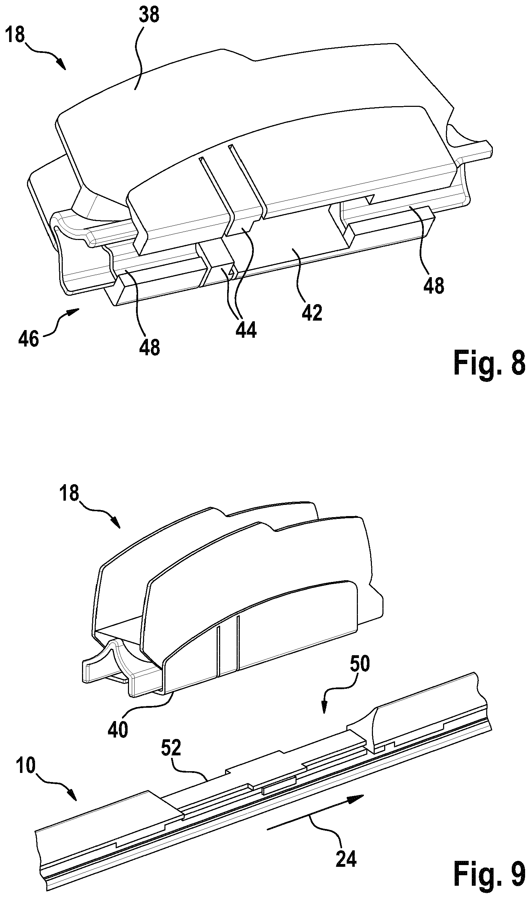

Der Wischblattadapter 18 ist in Figur 8 in einer perspektivischen Ansicht gezeigt und weist einen Grundkörper 38 auf, an dem zwei Befestigungsmittel 40 angeformt sind. Die Befestigungsmittel 40 grenzen an eine Zentralausnehmung 42 des Grundkörpers 38 an. Ferner sind am Grundkörper 38 zwei auslenkbare Rasthaken 44 angeordnet.

Der Wischblattadapter 10 weist ferner eine Längsführungseinheit 46 auf, welche vier Führungsnuten 48 umfasst. Die Führungsnuten 48 erstrecken sich parallel zur Längsrichtung 24 und sind zueinander hin geöffnet. Ferner grenzen die Führungsnuten 48 an die Zentralausnehmung 42 an. Eine Breite der Führungsnuten 48 entspricht einer Dicke des Trägerelements 16.

In Figur 9 ist ein erster Montageschritt der Wischblattvorrichtung dargestellt. Der Wischblattadapter 18 ist oberhalb des Wischblattadapteraufnahmebereichs 50 der Wischleisteneinheit 10 angeordnet. Wird der Wischblattadapter 18 auf die Wischleisteneinheit 10 gesetzt, greift das Befestigungsmittel 40 des Wischblattadapters 18 formschlüssig in die Befestigungsausnehmung 52 der Wischleisteneinheit 10 ein. Der Wischblattadapter 18 bildet mit der Wischleisteneinheit 10 einen Formschluss. Eine Bewegung der Wischleisteneinheit 10 relativ zum Wischblattadapter 18 ist in Längsrichtung 24 vermieden.

In einem zweiten Montageschritt wird das Trägerelement 16 in den Längsführungskanal 14 der Wischleisteneinheit 10 eingeführt. Im Wischblattadapteraufnahmebereich 50 tritt das Trägerelement 16 aus dem Längsführungskanal 14 in den Auflagekörper 58 und wird anschließend in die Führungsnuten 48 der Längsführungseinheit 46 des Wischblattadapters 18 geführt.

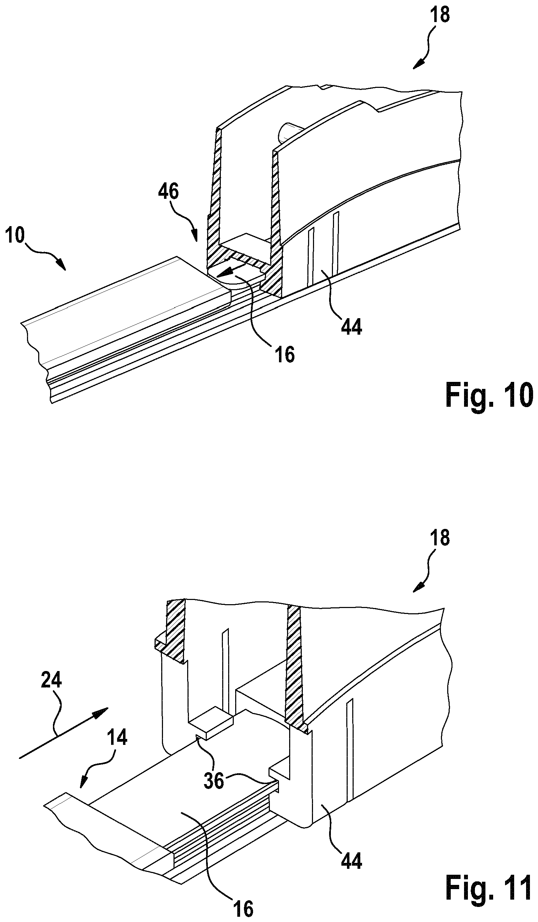

Figur 10 zeigt das Trägerelement 16, das komplett durch die Längsführungseinheit 46 geschoben ist. Das Trägerelement 16 bildet einen Formschluss mit dem Wischblattadapter 18. Der Wischblattadapter 18 kann somit nicht mehr von der Wischleisteneinheit 10 gelöst werden, sondern ist fest mit diesem verbunden.

Das Trägerelement 16 wird in einem dritten Montageschritt weiter geschoben, bis die Rasthaken 44 des Wischblattadapters 18 in die Rastausnehmungen 36 des Trägerelements 16 eingreifen und eine Rastverbindung eingehen, wie in Figur 11 dargestellt.

Die Rasthaken 44 werden dabei zunächst aus einer Ausgangslage quer zur Längsrichtung 24 ausgelenkt und bewegen sich dann elastisch zurück in die Ausgangslage. Dadurch wird ein Formschluss mit den Rastausnehmungen 36 gebildet und eine Bewegung des Trägerelements 46 relativ zum Wischblattadapter 18 in Längsrichtung 24 vermieden.

Durch das Weiterschieben des Trägerelements 16, tritt dieses wieder in den Längsführungskanal 14 der Wischleisteneinheit 10 ein und bildet mit diesem einen Formschluss. Eine Bewegung des Trägerelements 16 innerhalb des Längsführungskanals 14 ist in jeglicher Richtung vermieden.

## Patentansprüche

1. Wischblattvorrichtung mit einer Wischleisteneinheit (10), die einen Längsführungskanal (14) zur Aufnahme eines Trägerelements (16) aufweist, wobei der Längsführungskanal (14) zumindest eine Seitenöffnung (12) aufweist, wobei die zumindest eine Seitenöffnung (12) an Zwischenelemente (28) der Wischleisteneinheit (10) angrenzt, die zwischen zwei Bauteilen, und zwar einem Windabweiserelement (20) und einer Wischlippe (22), der Wischleisteneinheit (10) angeordnet sind und diese miteinander verbinden, wobei die Zwischenelemente (28) in zwei Längsreihen (30, 32) angeordnet sind, **dadurch gekennzeichnet, dass** zumindest ein Zwischenelement (28) einer Längsreihe (30) in einer Längsrichtung (24) betrachtet auf Höhe einer Seitenöffnung (12) angeordnet ist und dass die Zwischenelemente (28) einstückig mit der Wischlippe (22) oder dem Windabweiserelement (20) ausgebildet sind.

2. Wischblattvorrichtung nach einem der vorhergehenden Ansprüche, **dadurch gekennzeichnet, dass** das Trägerelement (16) eine Schutzbeschichtung aufweist, die dazu vorgesehen ist, das Trägerelement vor Beschädigungen und/oder Korrosionen zu schützen.

3. Wischblattvorrichtung nach einem der vorhergehenden Ansprüche, **dadurch gekennzeichnet, dass** die Wischleisteneinheit (10) zumindest eine Befestigungsausnehmung (52) aufweist, die dazu vorgesehen ist, einen Formschluss mit einem Wischblattadapter (18) zu bilden.

4. Wischblattvorrichtung nach einem der vorhergehenden Ansprüche, **gekennzeichnet durch** einen Wischblattadapter (18), der zumindest ein Befestigungsmittel (40) aufweist, das einen Formschluss mit einem Windabweiserelement (20) der Wischleisteneinheit (10) bildet und dazu vorgesehen ist, eine Bewegung der Wischleisteneinheit (10) relativ zum Wischblattadapter (18) in einer Längsrichtung (24) zu vermeiden.

5. Wischblattvorrichtung nach Anspruch 4, **dadurch gekennzeichnet, dass** der Wischblattadapter (18) einen Formschluss mit dem Trägerelement (16) bildet, und eine Bewegung des Trägerelements (16) relativ zum Wischblattadapter (18) in Längsrichtung (24) vermeidet.

6. Wischleisteneinheit (10) einer Wischblattvorrichtung nach einem der vorhergehenden Ansprüche.

## Claims

1. Wiper blade device with a wiper strip unit (10) which has a longitudinal guide channel (14) for receiving a support element (16), wherein the longitudinal guide channel (14) has at least one side opening (12), wherein the at least one side opening (12) is adjacent to intermediate elements (28) of the wiper strip unit (10) that are arranged between two components, specifically a wind deflector element (20) and a wiper lip (22), of the wiper strip unit (10) and connect said components to each other, wherein the intermediate elements (28) are arranged in two longitudinal rows (30, 32), **characterized in that** at least one intermediate element (28) of one longitudinal row (30) is arranged level with a side opening (12), as viewed in a longitudinal direction (24), and **in that** the intermediate elements (28) are formed in one piece with the wiper lip (22) or the wind deflector element (20).

2. Wiper blade device according to one of the preceding claims, **characterized in that** the support element (16) has a protective coating which is provided to protect the support element against damage and/or corrosion.

3. Wiper blade device according to either of the preceding claims, **characterized in that** the wiper strip unit (10) has at least one fastening recess (52) which is provided for forming a form-fitting connection to a wiper blade adapter (18).

4. Wiper blade device according to one of the preceding claims, **characterized by** a wiper blade adapter (18) which has at least one fastening means (40) which forms a form-fitting connection with a wind deflector element (20) of the wiper strip unit (10) and is provided for avoiding a movement of the wiper strip unit (10) relative to the wiper blade adapter (18) in a longitudinal direction (24) .

5. Wiper blade device according to Claim 4, **characterized in that** the wiper blade adapter (18) forms a form-fitting connection with the support element (16) and avoids a movement of the support element (16) relative to the wiper blade adapter (18) in the longitudinal direction (24).

6. Wiper strip unit (10) of a wiper blade device according to one of the preceding claims.

## Revendications

1. Système de balai d'essuie-glace avec une unité de bras d'essuie-glace (10), qui présente un canal de guidage longitudinal (14) destiné à contenir un élément de support (16), dans lequel le canal de guidage longitudinal (14) présente au moins une ouverture latérale (12), dans lequel ladite au moins une ouverture latérale (12) est adjacente à des éléments intermédiaires (28) de l'unité de bras d'essuie-glace (10), qui sont disposés entre deux composants, notamment entre un élément de déviation du vent (20) et une lèvre d'essuie-glace (22), de l'unité de bras d'essuie-glace (10) et relient ceux-ci l'un à l'autre, dans lequel les éléments intermédiaires (28) sont disposés en deux rangées longitudinales (30, 32), **caractérisé en ce qu'**au moins un élément intermédiaire (28) d'une rangée longitudinale (30) considéré dans une direction longitudinale (24) est disposé à hauteur d'une ouverture latérale (12) et **en ce que** les éléments intermédiaires (28) sont réalisés d'une seule pièce avec la lèvre d'essuie-glace (22) ou l'élément de déviation du vent (20).

2. Système de balai d'essuie-glace selon l'une quelconque des revendications précédentes, **caractérisé en ce que** l'élément de support (16) présente un revêtement de protection, qui est prévu pour protéger l'élément de support contre des dégradations et/ou contre la corrosion.

3. Système de balai d'essuie-glace selon l'une quelconque des revendications précédentes, **caractérisé en ce que** l'unité de bras d'essuie-glace (10) présente au moins un évidement de fixation (52), qui est prévu pour former un assemblage par emboîtement avec un adaptateur de balai d'essuie-glace (18).

4. Système de balai d'essuie-glace selon l'une quelconque des revendications précédentes, **caractérisé par** un adaptateur de balai d'essuie-glace (18), qui présente au moins un moyen de fixation (40), qui forme un assemblage par emboîtement avec un élément de déviation du vent (20) de l'unité de bras d'essuie-glace (10) et qui est prévu pour éviter un mouvement de l'unité de bras d'essuie-glace (10) par rapport à l'adaptateur de balai d'essuie-glace (18) dans une direction longitudinale (24).

5. Système de balai d'essuie-glace selon la revendication 4, **caractérisé en ce que** l'adaptateur de balai d'essuie-glace (18) forme un assemblage par emboîtement avec l'élément de support (16), et évite un mouvement de l'élément de support (16) par rapport à l'adaptateur de balai d'essuie-glace (18) en direction longitudinale (24).

6. Unité de bras d'essuie-glace (10) d'un système de balai d'essuie-glace selon l'une quelconque des revendications précédentes.
